# EUROPEAN PATENT SPECIFICATION

(11) **EP 4 739 971 B1**
(45) Date of publication and mention of the grant of the patent: **11.11.2026**
(21) Application number: 24748158.3
(22) Date of filing: 02.07.2024
(51) Int. Cl.: F28D 20/00

(54) **FLOW SYSTEM**
STRÖMUNGSSYSTEM
SYSTÈME D'ÉCOULEMENT

(30) Priority: 07.07.2023 NO 20230777
(43) Date of publication of application: 13.05.2026
(73) Proprietor: KYOTO GROUP AS, 0277 Oslo (NO)
(72) Inventor: BROWN, James, Norwich, Norfolk NR16 2QP (GB); BARROS BORRERO, Andrés, 41016 Sevilla (ES)
(74) Representative: AWA Norway AS
(86) International application number: PCT/NO2024/050152
(87) International publication number: WO 2025/014373

(56) References cited:
- EP-B1- 2 273 226
- WO-A2-2018/082815
- DE-A1- 3 145 197

## Description

### Field of disclosure

The present disclosure relates to the field of thermal energy storage systems.

### Background

Thermal energy storage systems are generally considered to be useful for balancing energy consumption between periods of low demand and periods of high demand. A thermal energy storage may be charged during a period of low demand, and discharged during a period of high demand. The charging may thus be performed during period when the cost of electricity/heat is low, while the discharge may be performed at a period when the cost of electricity/heat is high.

Various technologies may be employed in order achieve thermal energy storage, including systems that utilize sensible heat, thermochemical heat and latent heat. Some technologies employ for example solar power as a way to charge a thermal energy storage system while others employ electrical power. Systems that employ electrical power typically aim to benefit from the fluctuating power prices in order to create saving for the user, where the magnitude of said price fluctuations will put a limit the saving potential. For systems that employ electrical power for charging it is therefore of interest to keep both initial installation and equipment costs as well as operations cost as low as possible.

A thermal energy storage system according to the state of the art is known from WO 2018/082815 A2, which discloses a system comprising multiple storage tanks, a heat source, a heat exchanger, and a pipe system with a multiplexer and demultiplexer connecting these components, wherein each storage tank has a single opening serving as both inlet and outlet depending on the mode of operation, and the pipe system is configured to selectively connect the heat exchanger or the heat source to any one of the storage tanks via said common opening.

It is an aim of the present invention to provide a thermal energy storage system with a simple and scalable design.

### Summary of the invention

A first aspect of the present invention provides a thermal energy storage system for storing and transferring heat via a heat transfer fluid, the thermal energy storage system comprising a first storage tank comprising a first storage tank inlet and a first storage tank outlet, a second storage tank comprising a second storage tank inlet and a second storage tank outlet, a third storage tank comprising a third storage tank outlet, a heat source, a heat exchanger, a first pipe connected between the heat source and the first storage tank inlet, a second pipe connected between the heat exchanger and the second storage tank inlet, one or more overflow connectors arranged to enable the heat transfer fluid to overflow between the first storage tank, the second storage tank and the third storage tank, and a piping system connected to the heat source, the heat exchanger, the first storage tank outlet, the second storage tank outlet and the third storage tank outlet, where the piping system is configured to provide a first fluid connection between the heat exchanger and any one of the first storage tank outlet, the second storage tank outlet, and the third storage tank outlet, and provide a second fluid connection between the heat source and any one of the first storage tank outlet, the second storage tank outlet and the third storage tank outlet.

According to an embodiment of the present invention the thermal energy storage system further comprises a first pumping device configured to pump the heat transfer fluid from any one of the first storage tank outlet, the second storage tank outlet and the third storage tank outlet to the first storage tank inlet via the piping system, heat source and the first pipe, and a second pumping device configured to pump the heat transfer fluid from any one of the first storage tank outlet, the second storage tank outlet and the third storage tank outlet to the second storage tank inlet via the piping system, heat exchanger and the second pipe.

According to another embodiment of the present invention the first storage tank, the second storage tank and the third storage tank are connected in series via the one or more overflow connectors, wherein the third storage tank is positioned between the first storage tank and the second storage tank.

According to yet another embodiment of the present invention the thermal energy storage system is configured to store and transfer heat via a molten salt.

According to yet another embodiment of the present invention the one or more overflow connectors is provided with heat tracing.

According to yet another embodiment of the present invention the one or more overflow connectors are arranged to enable a fluid to overflow between the first storage tank, the second storage tank and the third storage tank when at least one of the first storage tank, the second storage tank and the third storage tank is filled with the heat transfer fluid to a maximum capacity.

According to yet another embodiment of the present invention the first storage tank, the second storage tank and the third storage tank are made from stainless steel or carbon steel.

According to yet another embodiment of the present invention each of the first storage tank, the second storage tank and the third storage tank have an internal volume in the range 20 m³ - 500 m³.

According to yet another embodiment of the present invention the thermal energy storage system is configured to store and transfer heat via a heat transfer fluid with a specific heat capacity of at most 3500 J/kg K, preferably in the range 500-2500 J/kg K, at a temperature of above 150 °C.

According to yet another embodiment of the present invention the storage tank outlet of any one or more of the first storage tank, the second storage tank and the third storage tank is arranged at the base of said storage tank.

According to yet another embodiment of the present invention the first pipe, second pipe and piping system is provided with heat tracing.

According to yet another embodiment of the present invention the heat exchanger is configured to generate steam.

According to yet another embodiment of the present invention the heat source is an electrical heater.

A second aspect of the present invention provides a method for generating, storing and transporting heat in a thermal energy storage system comprising the steps of, transporting the heat transfer fluid from any one of the first storage tank, the second storage tank and the third storage tank to the first storage tank via the piping system, heat source and the first pipe, heating the heat transfer fluid with the heat source, transporting the heat transfer fluid from any one of the first storage tank, the second storage tank and the third storage tank to the second storage tank via the piping system, heat exchanger and the second pipe, and transferring heat in the heat exchanger from the heat transfer fluid to a secondary heat transfer fluid.

According to an embodiment of the present invention the method according the heat transfer fluid has a specific heat capacity of at most 3500 J/kg K, preferably in the range 500-2500 J/kg K.

### Brief description of the drawings

Figure 1 is a schematic illustration of a thermal energy storage system according to the present invention,
Figure 2 is a schematic illustration of an exemplary piping system according to the present invention,
Figure 3 is a schematic illustration of a thermal energy storage system comprising an additional storage tank,
Figure 4 is a schematic illustration of a thermal energy storage system comprising a first pumping device and a second pumping device,
Figure 5 is a schematic illustration of a thermal energy storage system where the thermal energy storage system comprises heat tracing,
Figure 6 is a schematic illustration of a thermal energy storage system comprising overflow connectors connected to storage tanks such that overflow between the storage tanks may take place when one or more of the storage tanks is filled to its maximum capacity, and
Figure 7 is a schematic illustration of a thermal energy storage system where a valve is provided between the heat source out let and the first storage tank inlet, and where a valve is provided between the heat exchanger outlet and the second storage tank inlet.

### Detailed description of the disclosure

In the following, general embodiments as well as particular exemplary embodiments of the invention will be described. References will be made to the accompanying drawings. It shall be noted, however, that the drawings are exemplary embodiments only, and that other features and embodiments may well be within the scope of the invention as claimed. Further, the mentioning of references such as "a" or "an" etc. should not be construed as excluding a plurality. The term "invention" may herein be used interchangeably with the term "disclosure". The term "producing" may herein be used interchangeably with the term "obtaining".

Unless otherwise defined, all terms of art, notations and other scientific terms or terminology used herein are intended to have the meanings commonly understood by those of skill in the art to which this invention pertains. Certain terms of art, notations, and other scientific terms or terminology may, however, be defined specifically as indicated below.

The present invention concerns a thermal energy storage system for storing and transferring heat via a heat transfer fluid, and a method for generating, storing and transporting heat in a thermal energy storage system. The thermal energy storage system generally comprises in its most general form a first storage tank, a second storage tank, a third storage tank, a heat source, and a heat exchanger.

In operation the thermal energy storage system may generate heat using the heat source and store this heat in a heat transfer fluid stored inside any of the storage tanks. The heat transfer fluid may further be transported to the heat exchanger, where heat is released, before being transported back to any one of the storage tanks. The thermal storage system may thus be considered as a thermal battery that may be charged and discharged on demand.

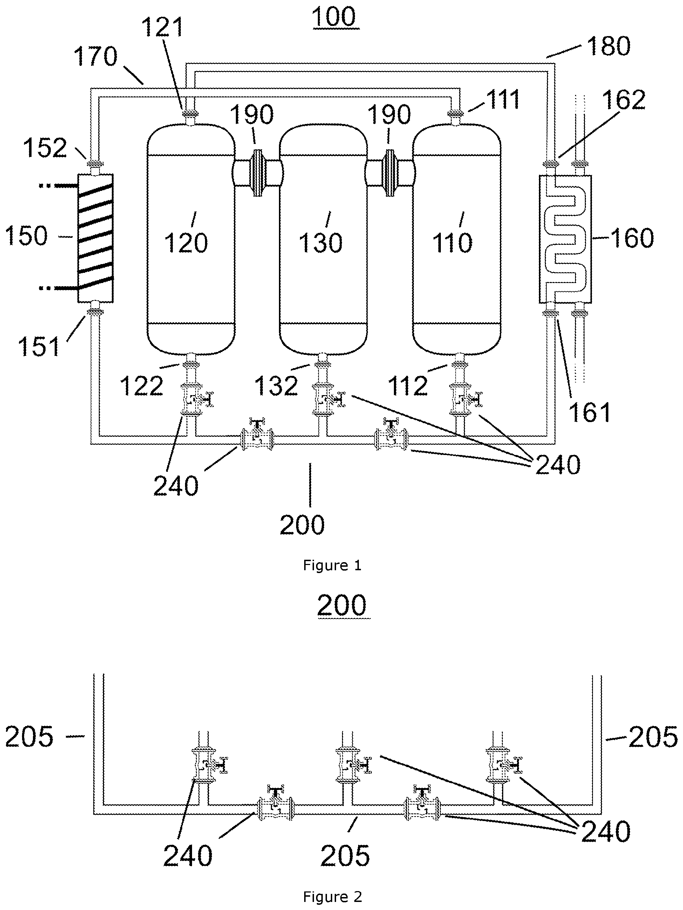

Figure 1 schematically illustrates a thermal energy storage system 100 according to the present invention where the thermal energy storage system 100 comprises a first storage tank 110, a second storage tank 120, a third storage tank 130, a heat source 150 and a heat exchanger 160. Each storage tank 110, 120, 130 is configured to store a heat transfer fluid, the heat source 150 is configured to heat the heat transfer fluid, and the heat exchanger 160 is configured to extract heat from the heat transfer fluid. The heat transfer fluid may generally be transferred within the thermal energy storage system 160 by means of a plurality of pipes.

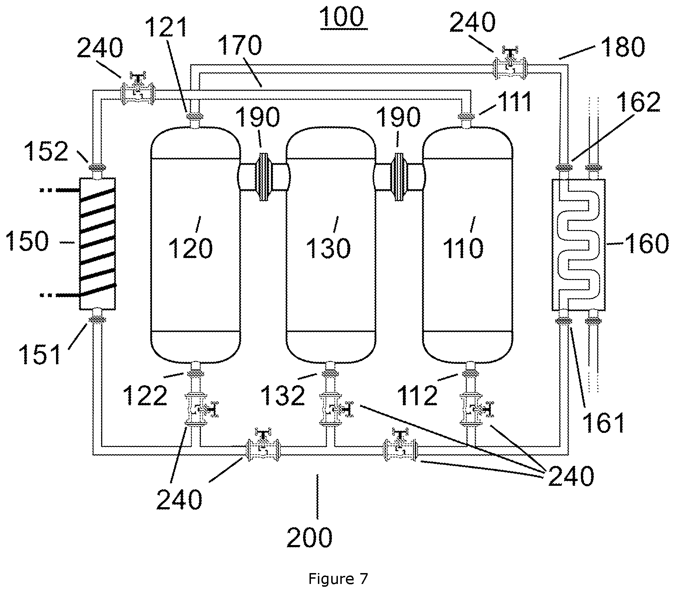

As schematically illustrated in figures 1 and 7, the first storage tank 110 comprises a first storage tank inlet 110 and a first storage tank outlet 120, the second storage tank 120 comprises a second storage tank inlet 121 and a second storage tank outlet 122, and the third storage tank 130 comprises a third storage tank outlet 132. Each said inlet and outlet may generally be configured to facilitate a fluid connection between the interior and exterior of the respective storage tank, and any one or more of said inlets and outlets may optionally comprise or be connected with a valve 240 configured to be operated between a closed and an open position. Any storage tank inlet or outlet may according to the present invention for example comprise a flange coupling or a fixed weld.

The thermal energy storage system comprises as schematically illustrated in figure 1 a first pipe 170 and a second pipe 180. The first pipe 170 is connected between the heat source 150 and the first storage tank inlet 111, whereas the second pipe 180 is connected between the heat exchanger 160 and the second storage tank inlet 121. The first pipe 170 may here provide fluid communication between the heat source 150 and the first storage tank 110, whereas the second pipe 180 may provide fluid communication between the heat exchanger 160 and the second storage tank 120.

The heat source 150 may as schematically illustrated in figure 1 generally comprise a heat source inlet 151 and a heat source outlet 152, and the first pipe 170 may thus be connected between the heat source outlet 152 and the first storage tank inlet 111. Further, the heat exchanger 160 may comprise a heat exchanger inlet 161 and a heat exchanger outlet 162, and the second pipe 180 may thus be connected between the heat exchanger outlet 162 and the second storage tank inlet 121. It may, however, generally be appreciated that both the heat source 150 and the heat exchanger 160 may take a variety of forms whose inlet and outlet may be interpreted broadly. A heat source 150 may for example be interpreted as a device configured to heat the heat transfer fluid, where said device is optionally provided with a heat source inlet 151 and a heat source outlet 152. A heat exchanger 160 may for example be interpreted as a device configured to transfer heat from the heat transfer fluid to another fluid, where said device is optionally provided with a heat exchanger inlet 161 and a heat exchanger outlet 162. It will however be appreciated by a person skilled in the art that any one or more of the heat source 150 and heat exchanger 160 may be built into other components of the thermal energy storage system 100, e.g. in piping.

As schematically illustrated in figures 1 and 2 the thermal energy storage system 100 further comprises a piping system 200 connected to the heat source 150, the heat exchanger 160, the first storage tank outlet 112, the second storage tank outlet 122 and the third storage tank outlet 132. More specifically the piping system 200 may be connected to the heat source inlet 151, the heat exchanger inlet 161, the first storage tank outlet 112, the second storage tank outlet 122 and the third storage tank outlet 132. The piping system 200 may be configured to provide a first fluid connection between the heat exchanger 150 and any one of the first storage tank outlet 112, the second storage tank outlet 122, and the third storage tank outlet 132, and may also be configured to provide, separately or additionally, a second fluid connection between the heat source 150 and any one of the first storage tank outlet 112, the second storage tank 122 outlet and the third storage tank outlet 132. A fluid connection may herein be interpreted as a connection that provides a fluid communication between two components of the thermal energy storage system 100.

The piping system 200 may as schematically illustrated in figure 2 generally according to the present invention comprise one or more pipes, e.g. a pipe manifold, and/or a plurality of interconnected pipes 205. The piping system 200 may further comprise any number of valves 240 that may be opened and closed in order to enable or disable any one or more of the first and second fluid connection. Each valve 240 may for example be opened and closed by means of an actuator or motor that may further be controlled by a suitable control system. The piping system 200 may thus be controlled such that a first fluid connection is enabled between the heat exchanger 150 and any one of the first storage tank outlet 112, the second storage tank outlet 122, and the third storage tank outlet 132. The piping system 200 may further be controlled such that a second fluid connection is enabled between the heat source 150 and any one of the first storage tank outlet 112, the second storage tank outlet 122, and the third storage tank outlet 132.

Figure 2 schematically illustrates a piping system 200 comprising a plurality of pipes 205 and a plurality of valves 240. As will be appreciated by a person skilled in the art, the piping system 200 may take on a variety of forms and that the illustration in figure 2 is an exemplary embodiment only. The piping system 200 may for example comprise one set of pipes and valves connecting the first storage tank outlet, the second storage tank outlet, and the third storage tank outlet to the heat source inlet, and another set of pipes and valves connecting the first storage tank outlet, the second storage tank outlet, and the third storage tank outlet to the heat exchanger inlet.

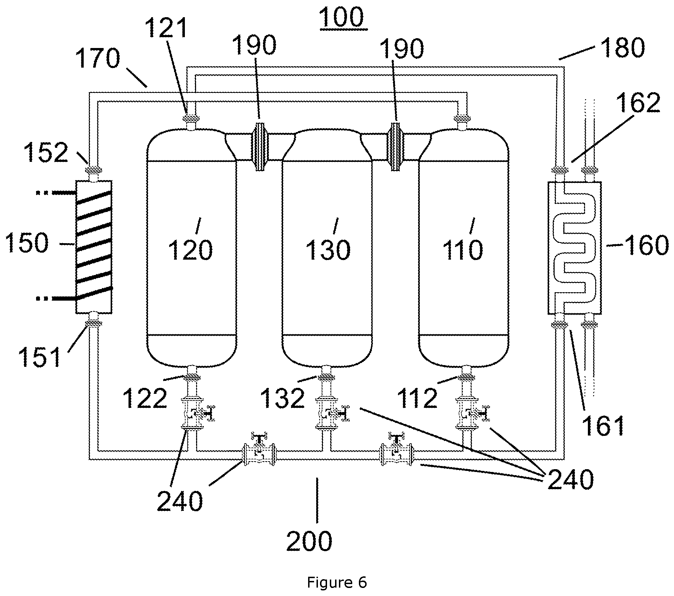

As schematically illustrated in figure 1 the thermal energy storage system 100 further comprises one or more overflow connectors 190 arranged to enable the heat transfer fluid to overflow between the first storage tank 110, the second storage tank 120 and the third storage tank 130. An overflow connector 190 may herein be a connector that enables fluid communication between any two or more storage tanks of the thermal energy system 100, and may for example be a closed pipe, conduit, or a direct joint. The one or more overflow connectors 190 may according to the present invention be arranged such that the heat transfer fluid may flow from one storage tank to another storage tank once the former of the two storage tanks is filled with the heat transfer fluid past a threshold percentage of filling. In the embodiment where the thermal energy storage system 100 comprises a first storage tank 110, a second storage tank 120 and a third storage tank 130, the one or more overflow connectors 190 may cause the heat transfer fluid to overflow from one storage tank to another once one or more of the first storage tank 110, second storage tank 120 or third storage tank 130 is filled passed the threshold percentage of filling. It will be appreciated by a person skilled in the art that the threshold percentage of filling may be chosen arbitrarily, but preferable values for the threshold percentage of filling have been found to be above 70 %, preferably above 80 %, and more preferably above 95 %. According to a particular embodiment of the present invention the one or more overflow connectors 190 is/are arranged to enable the heat transfer fluid to overflow between the first storage tank 110, the second storage tank 120 and the third storage tank 130 when at least one of the first storage tank 110, the second storage tank 120 and the third storage tank 130 is filled with the heat transfer fluid to the threshold percentage of filling. The threshold percentage of filling of any storage tank may generally be set equal to maximum filling capacity of said storage tank. Figure 6 schematically illustrates an embodiment of the present invention where the one or more overflow connectors 190 is/are arranged to enable a fluid to overflow between the first storage tank 110, the second storage tank 120 and the third storage tank 130 when at least one of the first storage tank 110, the second storage tank 120 and the third storage tank 130 is filled with the heat transfer fluid to its maximum capacity.

The thermal energy storage system 100 may in one example comprise one common overflow connector 190 being connected to all the storage tanks of the thermal heat storage system 100, e.g. where the overflow connector 190 is shaped as a manifold. Preferably, however, the thermal energy storage system 100 comprises one overflow connector 190 between adjacent storage tanks of the thermal energy storage system 110. Figure 1 schematically illustrates an example of the thermal energy storage system 100 where the thermal energy storage system 100 comprises a first overflow connector 190 connected between the first storage tank 110 and the third storage tank 130, and another overflow connector 190 connected between the second storage tank 120 and the third storage tank 130. The first storage tank 110, the second storage tank 120 and the third storage tank 130 may thus be connected in series via the overflow connectors 190, wherein the third storage tank 130 is positioned between the first storage tank 110 and the second storage tank 120. Optionally, following the previous example, the thermal energy storage system 100 may further comprise a third overflow connector 190 connected between the first storage tank 110 and the second storage tank 120.

Following the exemplary embodiment schematically illustrated in figure 1, the heat transfer fluid may be heated by the heat source 150 and transported to the first storage tank 110 via the first pipe 170. The first storage tank 110 may then gradually be filled up until filled to its threshold percentage of filling. When the first storage tank 110 is filled to threshold percentage of filling the heat transfer fluid may start to overflow via an overflow connector 190 connecting the first storage tank 110 to the third storage tank 130. The third storage tank 130 may subsequently, upon being filled to its threshold percentage of filling, start to overflow into the second storage tank 120, thereby gradually filling up the second storage tank 120.

The thermal energy storage system 100 may generally according to the present invention be configured to transport a heat transfer fluid from any one of the first storage tank 110, second storage tank 120 and third storage tank 130 via the heat source and into the first storage tank 110. The latter operation may herein be termed as a heating mode. The thermal energy storage system 100 may further be configured to separately or simultaneously transport the heat transfer fluid from any one of the first storage tank 110, second storage tank 120 and third storage tank 130 via the heat exchanger 150 and into the second storage tank 120. The latter operation may herein be termed as a heat extraction mode. The thermal energy storage system 100 may thus be operated in a heating mode, a heat extraction mode, or be operated simultaneously in a heating mode and in a heat extraction mode.

In operation the thermal energy storage system may be configured to execute a method for generating, storing and transporting heat. The method may comprise the step of, transporting the heat transfer fluid from any one of the first storage tank, the second storage tank and the third storage tank to the first storage tank via the piping system, heat source and the first pipe, and the step of heating the heat transfer fluid with the heat source. Simultaneously or alternatively the method may include the step of transporting the heat transfer fluid from any one of the first storage tank, the second storage tank and the third storage tank to the second storage tank via the piping system, heat exchanger and the second pipe, and the step of transferring heat in the heat exchanger from the heat transfer fluid to a secondary heat transfer fluid. The step of transferring heat in the heat exchanger from the heat transfer fluid to a secondary heat transfer fluid may include the formation of steam by the heat exchanger or via the heat transferred by the heat exchanger. The temperature of the heat storage fluid may preferably be above 150 °C.

The thermal energy storage system 100 may as schematically illustrated in figure 1 be arranged such that the first storage tank 110 is positioned closer to the heat exchanger 160 than the second storage tank 120 and the third storage tank 130. The latter is beneficial for limiting the distance necessary to transport newly heated heat transfer fluid from the first storage tank 110 to the heat exchanger 160. The thermal energy storage system 100 may further be arranged such that the second storage tank 120 is positioned closer to the heat source 150 than the first storage tank 110 and the second storage tank 120. The latter is beneficial for limiting the distance necessary to transport newly cooled heat transfer fluid from the second storage tank 120 to the heat source 160. Said arrangement is also beneficial for operating the thermal energy storage system 100 simultaneously in a heating mode and in a heat extraction mode.

The employment of one or more overflow connectors 190 as described herein has been found to be a preferable way to interconnect the first storage tank 110, second storage tank 120 and third storage tank 130 compared to for example the alternative of providing each storage tank with an inlet directly connected to one or more of the heat source 150 and the heat exchanger 160. The employment of one or more overflow connectors 190 may result in a lower overall complexity of the thermal energy storage system by for example removing the need to provide each storage tank with an inlet. The employment of one or more overflow connectors 190 may further remove the need for separate connections/piping between the heat source outlet 152 and each of the storage tanks and between the heat exchanger outlet 162 and each of the storage tanks. The thermal energy storage system 100 may thus be constructed such that the heat source outlet 152 is only connected to the first storage tank inlet 111 and the heat exchanger outlet 162 is only connected to the second storage tank inlet 121. The thermal energy storage system 100 may thus be constructed with no or at most one valve 240 between the heat source outlet 152 and the first storage tank inlet 121, and with no or at most one valve 240 between the heat exchanger outlet 162 and the second storage tank inlet 121. Figure 7 is a schematic illustration of the thermal energy storage system 100 where one valve 240 is arranged between the heat source outlet 152 and the first storage tank inlet 121, and where one valve 240 is arranged between the heat exchanger outlet 162 and the second storage tank inlet 121

The employment of a third storage tank in addition to the first storage tank and the second storage tank has been found to be preferable for hydraulic operation of the storage system when operating simultaneously in a heating mode and in a heat extraction mode. The latter is mainly preferable when to the storage tanks is configured to store either high temperature heat transfer fluid or low temperature heat transfer fluid.. The employment of a third storage tank in addition to the first storage tank and the second storage tank has further been found to be preferable in order to operate the thermal heat storage system simultaneously in a heating mode and in a heat extraction mode. In the latter case heated heat transfer fluid may enter the first storage tank at the same time as cooled heat transfer fluid may enter the second storage tank. The heat transfer fluid entering the heat exchanger may here be pre-heated heat transfer fluid from either the first storage tank or the third storage tank. In operation there may be a total of 1x storage tank volume that is empty. The latter is preferable when the heat storage fluid is molten salt. It is preferable to not mix hot and cold salts, so the third storage tank may be employed in order to avoid having to introduce hot molten salt into a storage tank containing cooled molten salt and vice versa.

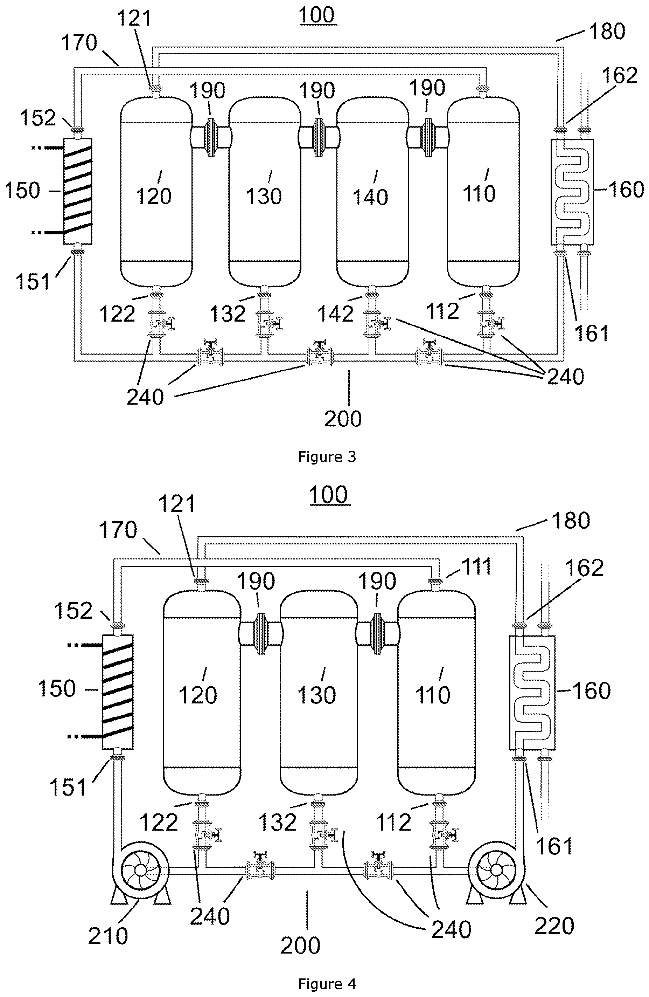

The thermal energy storage system 100 may as schematically illustrated in figure 3 be provided with one or more additional storage tanks 140. The one or more additional storage tanks 140 may for example be connected in series with the first storage tank 110, second storage tank 120 and third storage tank 130, and be positioned between the first storage tank 110 and the third storage tank 130 or between the second storage tank 120 and the third storage tank 130. The one or more additional storage tanks 140 may further be connected to any adjacent storage tank by means of an overflow connector 190 and may be connected to the heat source 150 and heat exchanger 160 by means of the piping system 200. The piping system 200 may be connected to an additional storage tank outlet 142 of each additional storage tank 140 and may thus be configured to provide a first fluid connection between the heat exchanger 160 and any one of the first storage tank outlet 112, the second storage tank outlet 122, the third storage tank outlet 132 and any additional storage tank outlet 142. The piping system 200 may additionally be configured to provide a second fluid connection between the heat source 150 and any one of the first storage tank outlet 112, the second storage tank outlet 122, the third storage tank outlet 132 and any additional storage tank outlet 142.

The thermal energy storage system may according to the present invention be modular. The addition of one or more additional storage tanks may due to the use of one or more overflow connectors be made without imposing complicated engineering operations. For the present thermal energy storage system, an additional storage tank may simply be connected between two storage tanks of the thermal energy storage system by an overflow connector to each adjacent storage tank and further be attached to the piping system via its additional storage tank outlet. The thermal energy storage system according to the present invention may thus be scalable according to a desired application. In order to simplify assembly and modularity of the thermal energy storage system it is generally preferable that each storage tank of the thermal energy storage system has the same size. Each storage tank of the thermal energy storage system may in any embodiment of the present invention have the same shape and/or same size.

As schematically illustrated in figure 1 the storage tank outlet of any one or more of the first storage tank 110, the second storage tank 120 and the third storage tank 130 may be arranged at the bottom of each respective storage tank. Positioning each storage tank outlet at the bottom of its respective storage tank is *i.a.* preferred in order to enable complete draining of said storage tank and to avoid stagnation of some of the heat transfer medium at a point inside a storage tank that would otherwise lie below the outlet of said storage tank.

The heat transfer fluid may as schematically illustrated in figure 4 be transported in the thermal energy storage system 100 by means of one or more pumping devices 210, 220. The thermal energy storage system 100 further thus comprise a plurality of pumping devices 210, 220. In a particular embodiment the thermal energy storage system 100 may comprise a first pumping device 210 and a second pumping device 220. The first pumping device 210 may here be configured to pump the heat transfer fluid from any one of the first storage tank outlet 112, the second storage tank 122 outlet and the third storage tank outlet 132 to the first storage tank inlet 111 via the piping system 200, heat source 150 and the first pipe 170. The second pumping device 220 may be configured to pump the heat transfer fluid from any one of the first storage tank outlet 112, the second storage tank outlet 122 and the third storage tank outlet 132 to the second storage tank inlet 121 via the piping system 200, heat exchanger 160 and the second pipe 180. It will be appreciated by a person skilled in the art that the thermal energy storage system 100 generally may comprise any number of pumping devices. It is however, preferred that the thermal energy storage system 110 comprises a maximum of two pumping devices, optionally together with two additional pumping devices installed for redundancy purposes. The use of a maximum of two pumping devices has been found to be preferable in order to minimize the number of components of the thermal energy storage system that may be subject to wear. A pumping device may generally herein be considered as a device configured to transfer a heat transfer fluid inside the thermal energy storage system 100. A pumping device may for example be a positive-displacement pump, a centrifugal pump or an axial-flow pump. It will further be appreciated that any one or more of the first pumping device 210 and the second pumping device 220 may be configured to pump the heat transfer fluid from any additional storage tank in the same manner as described for the first storage tank 110, second storage tank 120 and third storage tank 130.

The heat transfer fluid may generally be any heat transfer fluid suitable for being used to store and transfer sensible heat in the thermal energy storage system. The heat transfer fluid may for example be molten silicon, molten aluminium, silicone, propylene glycol, ethylene glycol or triethylene glycol. Preferably, the heat transfer fluid may be a fluid with a specific heat capacity at a temperature of above 150 °C of at most 3500 J/kg K, preferably in the range 500-2500 J/kg K. Said specific heat capacity is preferred in order to limit wear on the thermal energy storage system, and/or limit the amount of insulation needed to maintain acceptable heat loss to the ambient. The thermal energy storage system may thus be configured to store a heat transfer fluid with a specific heat capacity of at most 3500 J/kg K, preferably in the range 500-2500 J/kg K, at a temperature of above 150 °C. In operation the heat transfer fluid may preferably have a specific heat capacity of at most 3500 J/kg K, preferably in the range 500-2500 J/kg K.

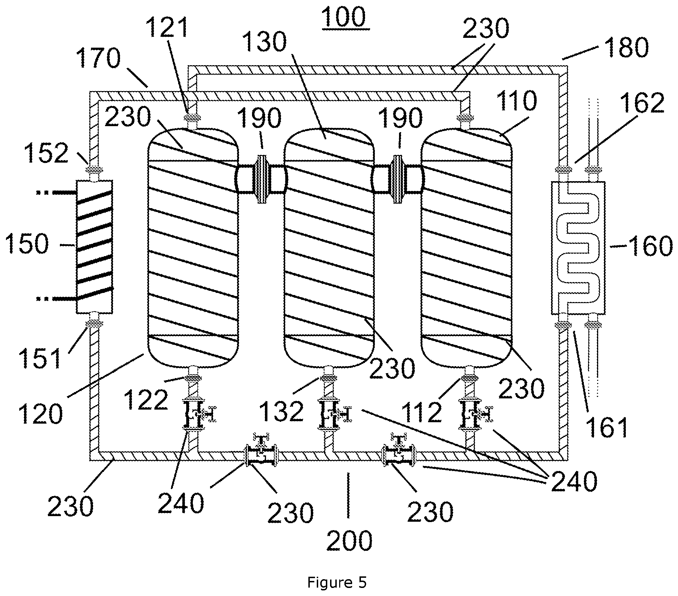

According to particular embodiment of the present invention, the thermal energy storage system 100 is configured to store and transfer heat via a molten salt. The various components of the thermal energy storage system 100 may in this embodiment be specifically configured to operate when the heat transfer fluid is molten salt. The latter may involve a specific configuration of the system for handling molten salt, and/or to avoid undesirable solidification of the molten salt. Any one or more pumping devices may for example be particularly configured to pump molten salt, and may thus for example be a circulation pump or a centrifugal pump. As schematically illustrated in figure 5, any one or more of the first pipe 170, second pipe 180, piping system 200 and the one or more overflow connectors 190 may be provided with heat tracing 230, where the heat trancing 230 further may be configured to prevent solidification of molten salt. Generally, any component of the thermal energy storage system 100 may be provided with heat tracing 230.

The thermal energy storage system may in a particular example be configured to store and transfer heat via a molten salt where the molten salt is chosen from the group comprising sodium nitrate, potassium nitrate and calcium nitrate. According to particular embodiment of the present invention, the thermal energy storage system is configured to store and transfer heat via a ternary salt such as Calcium-Potassium-Sodium-Nitrate. Calcium-Potassium-Sodium-Nitrate has been found to be preferable due to its low melting point. A low melting point may relative to a high melting point generally reduce the risk of accidental freezing of the molten salt and also reduce heat loss to the ambient.

Any storage tank may generally be made from stainless steel or carbon steel. Carbon steel is particularly suitable when the heat transfer fluid is Calcium-Potassium-Sodium-Nitrate. The melting point of Calcium-Potassium-Sodium-Nitrate avoids the need for high temperature resistant steels otherwise required for use with molten salts with a higher melting point, such as sodium nitrate, potassium nitrate and calcium nitrate. The sizes of any one or more of the storage tanks may be chosen based on the desired application of the thermal energy storage system. Any storage tank may generally have an internal volume in the range 20 m³ - 500 m³. All the storage tanks of the thermal energy storage system may have the same volumetric capacity.

The thermal energy storage system may generally act as a thermal energy storage where thermal energy is entered into the heat transfer fluid by the heat source at one point in time, and then later being extracted via the heat exchanger. The heat source may according to the present invention preferably be an electrical heater, but as will be appreciated by a person skilled in the art, other types of suitable heat sources may alternatively be envisaged such as a solar collector, a heat pump, or a geothermal heat source. An electrical heater or electric heat pump is generally preferred in order to ease the of use and to enable heating the heat transfer fluid using off-peak electricity. The latter enables the thermal energy storage system according to the present invention to be used for peak shaving. The electric heat may generally be a resistive heater.

Depending on the desired use of the thermal energy storage system, the heat exchanger may be chosen amongst various types of heat exchangers. The heat exchanger may for example be configured to transfer heat from the heat transfer fluid to another fluid, e.g. for heating purposes. Alternatively the heat exchanger may be configured to directly or indirectly generate stream, e.g. for generating electricity or for direct use in various industrial applications. In a particular embodiment the heat exchanger is configured to directly or indirectly generate steam, optionally from a heat transfer fluid holding a temperature of at least 150 °C. The heat source may in the latter embodiment be scaled such as to heat the heat transfer fluid to at least 150 °C. The thermal energy storage system may thus generally be configured to be used with a heat storage fluid holding a temperature above 150 °C. If molten salt is used as a heat transfer fluid, it is in a particular example preferred that the heat source is configured to heat the molten salt to a temperature of above 400 °C, preferably 415 °C. Use of a temperature above 400 °C has been found to enable the production of superheated steam, preferably up to 400 °C.

The thermal energy storage system may generally be a closed system, optionally be configured to be pressurized or be configured to be run at an atmospheric pressure. A closed system is preferable in order to avoid interaction between the heat transfer fluid and the ambient. If molten salt is used as a heat transfer fluid is preferred that the thermal energy storage system is a closed system configured to maintain a pressure of up to 2 Bar. The thermal energy storage system may optionally be provided with CO₂ filters. The latter has been found to reduce any degradation of the salts via carbonate forming.

## Claims

1. A thermal energy storage system (100) for storing and transferring heat via a heat transfer fluid, the thermal energy storage system (100) comprising
a first storage tank (110) comprising a first storage tank inlet (111) and a first storage tank outlet (112),
a second storage tank (120) comprising a second storage tank inlet (121) and a second storage tank outlet (122),
a third storage tank (130) comprising a third storage tank outlet (132),
a heat source (150),
a heat exchanger (160),
a first pipe (170) connected between the heat source (150) and the first storage tank inlet (111),
a second pipe (180) connected between the heat exchanger (160) and the second storage tank inlet (121),
one or more overflow connectors (190) arranged to enable the heat transfer fluid to overflow between the first storage tank (110), the second storage tank (120) and the third storage tank (130), and
a piping system (200) connected to the heat source (150), the heat exchanger (160), the first storage tank outlet (112), the second storage tank outlet (122) and the third storage tank outlet (132), where the piping system (200) is configured to
provide a first fluid connection between the heat exchanger (160) and any one of the first storage tank outlet (112), the second storage tank outlet (122), and the third storage tank outlet (132), and
provide a second fluid connection between the heat source (150) and any one of the first storage tank outlet (112), the second storage tank outlet (122) and the third storage tank outlet (132).

2. The thermal energy storage system (100) according to any one of the preceding claims, further comprising
a first pumping device (210) configured to pump the heat transfer fluid from any one of the first storage tank outlet (112), the second storage tank outlet (122) and the third storage tank outlet (132) to the first storage tank inlet (111) via the piping system (200), heat source (150) and the first pipe (170), and
a second pumping device (220) configured to pump the heat transfer fluid from any one of the first storage tank outlet (112), the second storage tank outlet (122) and the third storage tank outlet (132) to the second storage tank inlet (121) via the piping system (200), heat exchanger (160) and the second pipe (180).

3. The thermal energy storage system (100) according to any one of the preceding claims, wherein the first storage tank (110), the second storage tank (120) and the third storage tank (130) are connected in series via the one or more overflow connectors (190), wherein the third storage tank (130) is positioned between the first storage tank (110) and the second storage tank (120).

4. The thermal energy storage system (100) according to any one of the preceding claims, wherein the thermal energy storage system (100) is configured to store and transfer heat via a molten salt.

5. The thermal energy storage system (100) according to any one of the preceding claims, wherein the one or more overflow connectors (190) is provided with heat tracing (230).

6. The thermal energy storage system (100) according to any one of the preceding claims, wherein the one or more overflow connectors (190) are arranged to enable a fluid to overflow between the first storage tank (110), the second storage tank (120) and the third storage tank (130) when at least one of the first storage tank (110), the second storage tank (120) and the third storage tank (130) is filled with the heat transfer fluid to a maximum capacity.

7. The thermal energy storage system (100) according to any one of the preceding claims, wherein the first storage tank (110), the second storage tank (120) and the third storage tank (130) are made from stainless steel or carbon steel.

8. The thermal energy storage system (100) according to any one of the preceding claims, wherein each of the first storage tank (110), the second storage tank (120) and the third storage tank (130) have an internal volume in the range 20 m³ - 500 m³.

9. The thermal energy storage system (100) according to any one of the preceding claims, wherein the thermal energy storage system (100) is configured to store and transfer heat via a heat transfer fluid with a specific heat capacity of at most 3500 J/kg K, preferably in the range 500-2500 J/kg K, at a temperature of above 150 °C.

10. The thermal energy storage system (100) according to any one of the preceding claims wherein the storage tank outlet of any one or more of the first storage tank (110), the second storage tank (120) and the third storage tank (130) is arranged at the base of said storage tank.

11. The thermal energy storage system (100) according to any one of the preceding claims wherein the first pipe (170), second pipe (180) and piping system (200) is provided with heat tracing (230).

12. The thermal energy storage system (100) according to any one of the preceding claims wherein the heat exchanger (160) is configured to generate steam.

13. The thermal energy storage system (100) according to any one of the preceding claims wherein the heat source (150) is an electrical heater.

14. A method for generating, storing and transporting heat in a thermal energy storage system (100) according to any one of the claims 1 - 13 comprising the steps of,
transporting the heat transfer fluid from any one of the first storage tank (110), the second storage tank (120) and the third storage tank (130) to the first storage tank (110) via the piping system (200), heat source (150) and the first pipe (170), heating the heat transfer fluid with the heat source (150),
transporting the heat transfer fluid from any one of the first storage tank (110), the second storage tank (120) and the third storage tank (130) to the second storage tank (120) via the piping system (200), heat exchanger (160) and the second pipe (180), and
transferring heat in the heat exchanger (160) from the heat transfer fluid to a secondary heat transfer fluid.

15. The method according to claim 14, wherein the heat transfer fluid has a specific heat capacity of at most 3500 J/kg K, preferably in the range 500-2500 J/kg K.

## Patentansprüche

1. Wärmeenergiespeichersystem (100) zum Speichern und Übertragen von Wärme über ein Wärmeübertragungsfluid, wobei das Wärmeenergiespeichersystem (100) Folgendes umfasst:
einen ersten Speichertank (110), der einen ersten Speichertankeinlass (111) und einen ersten Speichertankauslass (112) umfasst,
einen zweiten Speichertank (120), der einen zweiten Speichertankeinlass (121) und einen zweiten Speichertankauslass (122) umfasst,
einen dritten Speichertank (130), der einen dritten Speichertankauslass (132) umfasst,
eine Wärmequelle (150),
einen Wärmetauscher (160),
ein erstes Rohr (170), das zwischen der Wärmequelle (150) und dem ersten Speichertankeinlass (111) verbunden ist, ein zweites Rohr (180), das zwischen dem Wärmetauscher (160) und dem zweiten Speichertankeinlass (121) verbunden ist,
einen oder mehrere Überlaufverbinder (190), die dazu ausgelegt sind, zu ermöglichen, dass das Wärmeübertragungsfluid zwischen dem ersten Speichertank (110), dem zweiten Speichertank (120) und dem dritten Speichertank (130) überläuft, und ein Rohrleitungssystem (200), das mit der Wärmequelle (150), dem Wärmetauscher (160), dem ersten Speichertankauslass (112), dem zweiten Speichertankauslass (122) und dem dritten Speichertankauslass (132) verbunden ist, wobei das Rohrleitungssystem (200) ausgelegt ist zum Bereitstellen einer ersten Fluidverbindung zwischen dem Wärmetauscher (160) und einem aus dem ersten Speichertankauslass (112), dem zweiten Speichertankauslass (122) und dem dritten Speichertankauslass (132), und
Bereitstellen einer zweiten Fluidverbindung zwischen der Wärmequelle (150) und einem aus dem ersten Speichertankauslass (112), dem zweiten Speichertankauslass (122) und dem dritten Speichertankauslass (132).

2. Wärmeenergiespeichersystem (100) nach einem der vorhergehenden Ansprüche, das ferner Folgendes umfasst:
eine erste Pumpvorrichtung (210), die dazu ausgelegt ist, das Wärmeübertragungsfluid von einem aus dem ersten Speichertankauslass (112), dem zweiten Speichertankauslass (122) und dem dritten Speichertankauslass (132) über das Rohrleitungssystem (200), die Wärmequelle (150) und das erste Rohr (170) zu dem ersten Speichertankeinlass (111) zu pumpen, und
eine zweite Pumpvorrichtung (220), die dazu ausgelegt ist, das Wärmeübertragungsfluid von einem aus dem ersten Speichertankauslass (112), dem zweiten Speichertankauslass (122) und dem dritten Speichertankauslass (132) über das Rohrleitungssystem (200), den Wärmetauscher (160) und das zweite Rohr (180) zu dem zweiten Speichertankeinlass (121) zu pumpen.

3. Wärmeenergiespeichersystem (100) nach einem der vorhergehenden Ansprüche, wobei der erste Speichertank (110), der zweite Speichertank (120) und der dritte Speichertank (130) über den einen oder die mehreren Überlaufverbinder (190) in Reihe geschaltet sind, wobei der dritte Speichertank (130) zwischen dem ersten Speichertank (110) und dem zweiten Speichertank (120) positioniert ist.

4. Wärmeenergiespeichersystem (100) nach einem der vorhergehenden Ansprüche, wobei das Wärmeenergiespeichersystem (100) dazu ausgelegt ist, Wärme über ein geschmolzenes Salz zu speichern und zu übertragen.

5. Wärmeenergiespeichersystem (100) nach einem der vorhergehenden Ansprüche, wobei der eine oder die mehreren Überlaufverbinder (190) mit einer Begleitheizung (230) versehen sind.

6. Wärmeenergiespeichersystem (100) nach einem der vorhergehenden Ansprüche, wobei der eine oder die mehreren Überlaufverbinder (190) angeordnet sind, um zu ermöglichen, dass ein Fluid zwischen dem ersten Speichertank (110), dem zweiten Speichertank (120) und dem dritten Speichertank (130) überläuft, wenn mindestens einer aus dem ersten Speichertank (110), dem zweiten Speichertank (120) und dem dritten Speichertank (130) mit dem Wärmeübertragungsfluid bis zu einer maximalen Kapazität gefüllt ist.

7. Wärmeenergiespeichersystem (100) nach einem der vorhergehenden Ansprüche, wobei der erste Speichertank (110), der zweite Speichertank (120) und der dritte Speichertank (130) aus Edelstahl oder Kohlenstoffstahl hergestellt sind.

8. Wärmeenergiespeichersystem (100) nach einem der vorhergehenden Ansprüche, wobei sowohl der erste Speichertank (110), der zweite Speichertank (120) als auch der dritte Speichertank (130) ein Innenvolumen im Bereich von 20 m³ - 500 m³ aufweisen.

9. Wärmeenergiespeichersystem (100) nach einem der vorhergehenden Ansprüche, wobei das Wärmeenergiespeichersystem (100) dazu ausgelegt ist, Wärme über ein Wärmeübertragungsfluid mit einer spezifischen Wärmekapazität von höchstens 3500 J/kg K, vorzugsweise im Bereich von 500-2500 J/kg K, bei einer Temperatur von über 150 °C zu speichern und zu übertragen.

10. Wärmeenergiespeichersystem (100) nach einem der vorhergehenden Ansprüche, wobei der Speichertankauslass von einem oder mehreren aus dem ersten Speichertank (110), dem zweiten Speichertank (120) und dem dritten Speichertank (130) an der Basis des Speichertanks angeordnet ist.

11. Wärmeenergiespeichersystem (100) nach einem der vorhergehenden Ansprüche, wobei das erste Rohr (170), das zweite Rohr (180) und das Rohrleitungssystem (200) mit einer Begleitheizung (230) versehen sind.

12. Wärmeenergiespeichersystem (100) nach einem der vorhergehenden Ansprüche, wobei der Wärmetauscher (160) dazu ausgelegt ist, Dampf zu erzeugen.

13. Wärmeenergiespeichersystem (100) nach einem der vorhergehenden Ansprüche, wobei die Wärmequelle (150) eine elektrische Heizung ist.

14. Verfahren zum Erzeugen, Speichern und Transportieren von Wärme in einem Wärmeenergiespeichersystem (100) nach einem der Ansprüche 1 - 13, das die folgenden Schritte umfasst:
Transportieren des Wärmeübertragungsfluids von einem aus dem ersten Speichertank (110), dem zweiten Speichertank (120) und dem dritten Speichertank (130) zu dem ersten Speichertank (110) über das Rohrleitungssystem (200), die Wärmequelle (150) und das erste Rohr (170),
Erwärmen des Wärmeübertragungsfluids mit der Wärmequelle (150),
Transportieren des Wärmeübertragungsfluids von einem aus dem ersten Speichertank (110), dem zweiten Speichertank (120) und dem dritten Speichertank (130) zu dem zweiten Speichertank (120) über das Rohrleitungssystem (200), den Wärmetauscher (160) und das zweite Rohr (180), und
Übertragen von Wärme in dem Wärmetauscher (160) von dem Wärmeübertragungsfluid auf ein sekundäres Wärmeübertragungsfluid.

15. Verfahren nach Anspruch 14, wobei das Wärmeübertragungsfluid eine spezifische Wärmekapazität von höchstens 3500 J/kg K, vorzugsweise im Bereich von 500-2500 J/kg K aufweist.

## Revendications

1. Système de stockage d'énergie thermique (100) pour stocker et transférer de la chaleur par l'intermédiaire d'un fluide caloporteur, le système de stockage d'énergie thermique (100) comprenant
un premier réservoir de stockage (110) comprenant une première entrée de réservoir de stockage (111) et une première sortie de réservoir de stockage (112),
un deuxième réservoir de stockage (120) comprenant une deuxième entrée de réservoir de stockage (121) et une deuxième sortie de réservoir de stockage (122),
un troisième réservoir de stockage (130) comprenant une troisième sortie de réservoir de stockage(132),
une source de chaleur (150),
un échangeur de chaleur (160),
un premier tube (170) raccordé entre la source de chaleur (150) et la première entrée de réservoir de stockage (111),
un deuxième tube (180) raccordé entre l'échangeur de chaleur (160) et la deuxième entrée de réservoir de stockage (121),
un ou plusieurs raccords de trop-plein (190) agencés pour permettre au fluide caloporteur de déborder entre le premier réservoir de stockage (110), le deuxième réservoir de stockage (120) et le troisième réservoir de stockage (130), et un système de tuyauterie (200) raccordé à la source de chaleur (150), à l'échangeur de chaleur (160), à la première sortie de réservoir de stockage (112), à la deuxième sortie de réservoir de stockage (122) et à la troisième sortie de réservoir de stockage (132), le système de tuyauterie (200) étant conçu pour
produire une première liaison fluidique entre l'échangeur de chaleur (160) et l'une quelconque parmi la première sortie de réservoir de stockage (112), la deuxième sortie de réservoir de stockage (122) et la troisième sortie de réservoir de stockage (132), et
produire une deuxième liaison fluidique entre la source de chaleur (150) et l'une quelconque parmi la première sortie de réservoir de stockage (112), la deuxième sortie de réservoir de stockage (122) et la troisième sortie de réservoir de stockage (132).

2. Système de stockage d'énergie thermique (100) selon l'une quelconque des revendications précédentes, comprenant en outre
un premier dispositif de pompage (210) conçu pour pomper le fluide caloporteur de l'une quelconque parmi la première sortie de réservoir de stockage (112), la deuxième sortie de réservoir de stockage (122) et la troisième sortie de réservoir de stockage (132) à la première entrée de réservoir de stockage (111) par l'intermédiaire du système de tuyauterie (200), de la source de chaleur (150) et du premier tube (170), et
un deuxième dispositif de pompage (220) conçu pour pomper le fluide caloporteur de l'une quelconque parmi la première sortie de réservoir de stockage (112), la deuxième sortie de réservoir de stockage (122) et la troisième sortie de réservoir de stockage (132) à la deuxième entrée de réservoir de stockage (121) par l'intermédiaire du système de tuyauterie (200), de l'échangeur de chaleur (160) et du deuxième tube (180).

3. Système de stockage d'énergie thermique (100) selon l'une quelconque des revendications précédentes, dans lequel le premier réservoir de stockage (110), le deuxième réservoir de stockage (120) et le troisième réservoir de stockage (130) sont raccordés en série par l'intermédiaire du ou des raccords de trop-plein (190), dans lequel le troisième réservoir de stockage (130) est positionné entre le premier réservoir de stockage (110) et le deuxième réservoir de stockage (120).

4. Système de stockage d'énergie thermique (100) selon l'une quelconque des revendications précédentes, dans lequel le système de stockage d'énergie thermique (100) est conçu pour stocker et transférer de la chaleur par l'intermédiaire d'un sel fondu.

5. Système de stockage d'énergie thermique (100) selon l'une quelconque des revendications précédentes, dans lequel le ou les raccords de trop-plein (190) sont pourvus d'un traçage de chaleur (230).

6. Système de stockage d'énergie thermique (100) selon l'une quelconque des revendications précédentes, dans lequel le ou les raccords de trop-plein (190) sont agencés pour permettre à un fluide de déborder entre le premier réservoir de stockage (110), le deuxième réservoir de stockage (120) et le troisième réservoir de stockage (130) lorsqu'au moins l'un parmi le premier réservoir de stockage (110), le deuxième réservoir de stockage (120) et le troisième réservoir de stockage (130) est rempli avec le fluide caloporteur à une capacité maximale.

7. Système de stockage d'énergie thermique (100) selon l'une quelconque des revendications précédentes, dans lequel le premier réservoir de stockage (110), le deuxième réservoir de stockage (120) et le troisième réservoir de stockage (130) sont constitués d'acier inoxydable ou d'acier au carbone.

8. Système de stockage d'énergie thermique (100) selon l'une quelconque des revendications précédentes, dans lequel chacun parmi le premier réservoir de stockage (110), le deuxième réservoir de stockage (120) et le troisième réservoir de stockage (130) a un volume interne situé dans la plage de 20 m³ à 500 m³.

9. Système de stockage d'énergie thermique (100) selon l'une quelconque des revendications précédentes, dans lequel le système de stockage d'énergie thermique (100) est conçu pour stocker et transférer de la chaleur par l'intermédiaire d'un fluide caloporteur ayant une capacité thermique massique d'au plus 3500 J/kg K, de préférence dans la plage de 500 à 2500 J/kg K, à une température supérieure à 150 °C.

10. Système de stockage d'énergie thermique (100) selon l'une quelconque des revendications précédentes, dans lequel la sortie de réservoir de stockage d'un quelconque ou plusieurs parmi le premier réservoir de stockage (110), le deuxième réservoir de stockage (120) et le troisième réservoir de stockage (130) est agencée au niveau de la base dudit réservoir de stockage.

11. Système de stockage d'énergie thermique (100) selon l'une quelconque des revendications précédentes, dans lequel le premier tube (170), le deuxième tube (180) et le système de tuyauterie (200) sont pourvus d'un traçage de chaleur (230).

12. Système de stockage d'énergie thermique (100) selon l'une quelconque des revendications précédentes, dans lequel l'échangeur de chaleur (160) est conçu pour générer de la vapeur.

13. Système de stockage d'énergie thermique (100) selon l'une quelconque des revendications précédentes, dans lequel la source de chaleur (150) est un dispositif de chauffage électrique.

14. Procédé pour générer, stocker et transporter de la chaleur dans un système de stockage d'énergie thermique (100) selon l'une quelconque des revendications 1 à 13, comprenant les étapes de
transport du fluide caloporteur de l'un quelconque parmi le premier réservoir de stockage (110), le deuxième réservoir de stockage (120) et le troisième réservoir de stockage (130) au premier réservoir de stockage (110) par l'intermédiaire du système de tuyauterie (200), de la source de chaleur (150) et du premier tube (170), chauffage du fluide caloporteur à l'aide de la source de chaleur (150),
transport du fluide caloporteur de l'un quelconque parmi le premier réservoir de stockage (110), le deuxième réservoir de stockage (120) et le troisième réservoir de stockage (130) au deuxième réservoir de stockage (120) par l'intermédiaire du système de tuyauterie (200), de l'échangeur de chaleur (160) et du deuxième tube (180), et
transfert de chaleur dans l'échangeur de chaleur (160) du fluide caloporteur à un fluide caloporteur secondaire.

15. Procédé selon la revendication 14, dans lequel le fluide caloporteur a une capacité thermique massique d'au plus 3500 J/kg K, de préférence dans la plage de 500 à 2500 J/kg K.
